# EUROPÄISCHE PATENTANMELDUNG

(11) **EP 4 478 661 A1**
(43) Veröffentlichungstag der Anmeldung: **18.12.2024**
(21) Anmeldenummer: 23179761.4
(22) Anmeldetag: 16.06.2023
(51) Int. Cl.: H04L 9/40, H04L 61/50, H04W 12/122, H04L 61/251, H04L 61/4511, H04L 61/5007

(54) **VERFAHREN UND SYSTEM FÜR DAS HANDLING VON MALWARE-INFEKTIONEN**

(71) Anmelder: Deutsche Telekom AG, 53113 Bonn (DE)
(72) Erfinder: GUMANN, Patrick, 91275 Auerbach (DE); HABERKORN, Günter, 92262 Birgland/Schwend (DE); KRAMPETZ, Alexander, 72574 Bad Urach OT Sirchingen (DE)
(74) Vertreter: Nern, Peter-Michael

(57) **Zusammenfassung**

Die Erfindung betrifft eine Lösung für das Handling von Malware-Infektionen, durch welche teilnehmerseitige Endeinrichtungen TE (1) eines Kommunikationsnetzes oder an ihnen betriebene Endgeräte mit einer Schadsoftware infiziert wurden, die ihrer Eingliederung in ein Botnetz, zum Zweck ihrer Fremdkontrolle durch eine entfernte, computerbasierten Angriffseinrichtung CA (4) dient. Beim Start einer Internet-Session, welcher durch eine TE (1) unter Verwendung einer zuvor durch Netzwerkeinrichtungen eines Missbrauchserkennungs- und Behandlungssubsystems MBS (3) des Netzbetreibers als maliziös identifizierten und registrierten Netzwerkadresse einer CA (4) erfolgt, wird die diese Session startende TE (1) zur automatisierten Auslösung weiterer technischer Maßnahmen unter einem sie in dem Kommunikationsnetz eindeutig identifizierenden Kennzeichen als infizierte TE (1) registriert. Dies geschieht indem durch Netzwerkeinrichtungen (2) eines Adressierungssubsystem ASS zu der beim Start der Session verwendeten maliziösen Netzwerkadresse der CA (4) eine festgelegte IPv6-Austauschadresse des Netzbetreibers an die TE (1) zurückgegeben und diese hierdurch veranlasst wird, mit der Aussendung weiterer Session-Daten als Absenderadresse ihre eigene IPv6-Adresse anzugeben. Diese wird dann durch dafür ausgebildete Netzwerkeinrichtungen des MBS (3) zusammen mit einem Zeitstempel registriert.

## Beschreibung

Die Erfindung betrifft eine Lösung für das Handling von Malware-Infektionen, durch welche teilnehmerseitige Endeinrichtungen (im Weiteren auch TE) eines Kommunikationsnetzes oder an ihnen betriebene Endgeräte mit einer Schadsoftware infiziert wurden, die deren Eingliederung in ein Botnetz, zum Zweck ihrer Fremdkontrolle und/oder zur Fremdsteuerung mittels einer entfernten computerbasierten Angriffseinrichtung (im Weiteren auch CA), dient. Diese Lösung ermöglicht es, jeweils dediziert auf eine infizierte Endeinrichtung TE zugeschnittene technische Maßnahmen ergreifen zu können, insbesondere auch derartige technische Maßnahmen automatisiert auszulösen. Gegenstände der Erfindung sind ein entsprechendes Verfahren und ein zur Durchführung des Verfahrens geeignetes System, respektive Kommunikationsnetz. Die beschriebene Lösung ist vorzugsweise für einen Einsatz im Zusammenhang mit an mobilfunkfähigen Endgeräten auftretenden Infektionen der vorgenannten Art konzipiert, ohne jedoch hierauf beschränkt zu sein.

Im Zusammenhang mit dem Einsatz der Computertechnik sind an derartigen Geräten, respektive Einrichtungen auftretende Infektionen mit Schadsoftware und das Ergreifen geeigneter, hiergegen gerichteter Maßnahmen schon seit langem geläufig. Hierzu gehören auch Szenarien, welche ihren Ursprung in der Vernetzung computertechnischer Geräte und Einrichtungen über das Internet haben. Eine in diesem Zusammenhang häufig anzutreffende Form des Angriffs ist es, computertechnische Geräte und Einrichtungen, welche Zugang zum Internet haben, durch die Verseuchung mit einer entsprechenden Schadsoftware in ein aus einer Vielzahl infizierter Geräte und Einrichtungen bestehendes Botnetz einzubinden und diese missbräuchlich sowie widerrechtlich fremdzusteuern.

Mit Hilfe solche Botnetze kontrollierender und steuernder Server, sogenannter C2-Server oder auch Command-and-Control-Server, ist es dabei Angreifern, nämlich den Betreibern dieser Server, möglich, die befallenen, in das Botnetz eingegliederten Einrichtungen für unterschiedlichste Zwecke zu missbrauchen. So werden beispielsweise die mit der Schadsoftware infizierten, als Zombies des Botnetzes bezeichneten computertechnischen Einrichtungen für Distributed Denial of Service Attacken (DDoS) missbraucht, durch welche Server das Internet nutzender Dienstleister oder auch Netzwerkeinrichtungen von Netzbetreibern mit Massenanfragen angegriffen werden. Solche Massenanfragen führen dann im Allgemeinen zu einer Überlastung und damit zu einer zumindest temporären Nichtverfügbarkeit der angegriffenen Systeme.

Das letztgenannte Beispiel zeigt dabei sehr klar, dass Infektionen von im Internet genutzten Geräten/Einrichtungen mit einer Schadsoftware nicht nur für die Betreiber dieser Geräte/Einrichtungen selbst, sondern auch für Betreiber anderer am Datenverkehr über das Internet beteiligter Teilnehmer ein Problem darstellen. Dies gilt auch für die Netzbetreiber, die infolge entsprechender Attacken auf ihre Netzwerkeinrichtungen, respektive auf die Netzwerkinfrastruktur, schlimmstenfalls ihre Dienstleistungen für eine gewisse Zeit nicht mehr erbringen können. Daher haben auch die Netzbetreiber ein großes Interesse daran, in geeigneter Weise mit an teilnehmerseitigen Geräten oder Einrichtungen auftretenden Infektionen umzugehen sowie Maßnahmen zur Eindämmung daraus resultierender Folgen und/oder zur Beseitigung von Infektionen auf betroffenen Einrichtungen zu ergreifen.

Mit der zunehmenden Leistungsfähigkeit mobilfunkfähiger Endgeräte, wie insbesondere Smartphones, und der starken Durchdringung der Arbeitswelt, aber auch des privaten Lebens mit derartigen hochleistungsfähigen Endgeräten sind auch diese in den Fokus potenzieller Angreifer geraten. Daher haben auch Mobilfunkbetreiber ein sehr großes Interesse daran, die Endgeräte ihrer Kunden vor einer Infektion mit Malware zu schützen sowie im Falle einer dennoch eingetretenen Infektion geeignete Maßnahmen für den Umgang damit, also insbesondere zur Eindämmung daraus resultierender Folgen, zu ergreifen.

Im Zusammenhang mit früher häufig genutzten Angriffstechniken konnten mit einer Schadsoftware verseuchte und gegebenenfalls in ein Botnetz eingegliederte Mobilfunkendgeräte durch die Netzwerkeinrichtungen der Netzbetreiber oft aufgrund von Trendänderungen im Nutzungsverhalten, wie beispielsweise durch eine auffällige Änderung des an ihnen auftretenden eingehenden und ausgehenden Datenverkehrs oder die gehäufte Buchung gebührenpflichtiger Mehrwertdienste, identifiziert werden. Hierdurch war es möglich, unmittelbar auf ein solchermaßen als infiziert identifiziertes Mobilfunkendgerät zugeschnittene Maßnahmen zu ergreifen. So kann beispielsweise sämtlicher oder nach bestimmten Kriterien als missbräuchlich eingestufter Datenverkehr mit Wirkung für das betroffene Endgerät blockiert werden.

Neuere Angriffsszenarien sind hingegen häufiger derart gestaltet, dass sie keine Verkehrs-Signifikanz mehr haben, das heißt ein betroffenes Endgerät nicht mehr anhand auffälliger Verkehrscharakteristiken, wie eines erhöhten oder ungewöhnlichen Datenverkehrs, zu identifizieren ist. So wird es beispielsweise durch die Angreifer vermieden, die Schadsoftware unmittelbar über ein mit Malware infiziertes Endgerät im Netz weiter zu verteilen. Im Zusammenhang mit dem Versuch, computertechnische Endgeräte und Endeinrichtungen, wie beispielsweise mobilfunkfähige Endgeräte, in ein Botnetz einzubinden, kann ein entsprechender Versuch daher möglicherweise nur dadurch erkannt werden, dass ein betroffenes Endgerät / eine betroffene Endeinrichtung zum Zweck des Datenaustausches Kontakt zu einer computerbasierten Angriffseinrichtung CA, wie einem C2-Server aufbaut.

Das heißt, der Datenverkehr im Netzwerk ist darauf zu monitoren, ob durch teilnehmerseitige Endeinrichtungen TE der Versuch unternommen wird, zu einer solchen CA eine Session aufzubauen. Das Problem ist allerdings, dass es das Feststellen eines solchen Versuchs nicht unmittelbar ermöglicht, eine jeweilige teilnehmerseitige Endeinrichtung, welche eine solche Session zu einer entsprechenden CA und damit zu einer maliziösen Netzwerkadresse aufbaut, unmittelbar eindeutig zu identifizieren. Dies liegt daran, dass in den heute immer noch stark IPv4-orientierten Netzwerken aufgrund der zwischenzeitlich eingetretenen Erschöpfung von frei verfügbaren IPv4-Adressen, ein und dieselbe IPv4-Adresse häufig gleichzeitig an bis zu acht oder auch mehr teilnehmerseitige Endgeräteeinrichtungen TE vergeben wird. Die korrekte Zuleitung von Daten an eine für deren Empfang bestimmte teilnehmerseitige Endeinrichtung erfolgt dabei seitens der Netzbetreiber mithilfe eines als Carrier grade NAT (NAT = Network Address Translation) bezeichneten Mechanismus unter Nutzung den IPv4-Adressen nachgestellter Suffixes, wie zum Beispiel Port-Adressen.

Aufgabe der Erfindung ist es, eine Lösung für die zuvor beschriebenen Probleme anzugeben. Es ist eine Lösung für den Umgang mit Malware-Infektionen bereitzustellen, welche es ermöglicht, eine Malware-Infektion, die darauf abzielt, eine teilnehmerseitige Endeinrichtung TE, insbesondere zum Zweck ihrer unbefugten Fremdsteuerung in ein Botnetz einzugliedern, auch dann zu erkennen, wenn diese Malware an der infizierten TE keine Trendänderung im Nutzungsverhalten, wie beispielsweise einen auffällig erhöhten Datenverkehr, zur Folge hat, wobei aber eine gegebenenfalls erkannte Infektion zur vorzugsweise auch automatisierten Einleitung weiterer Maßnahmen dennoch eindeutig der jeweils infizierten Endeinrichtung zuordenbar sein soll.

Die Aufgabe wird durch ein Verfahren mit den Merkmalen des Patentanspruchs 1 gelöst. Vorteilhafte Aus- und Weiterbildungen des Verfahrens sind durch die Unteransprüche gegeben.

Das zur Lösung der Aufgabe vorgestellte Verfahren für den Umgang mit Malware-Infektionen bezieht sich also auf teilnehmerseitige Endeinrichtungen (im Weiteren verkürzend TE) eines Kommunikationsnetzes oder an diesen betriebene Endgeräte, die mit einer Schadsoftware infiziert wurden, durch welche die betreffenden (infizierten) TE in ein Botnetz zum Zweck ihrer unbefugten, respektive missbräuchlichen Fernsteuerung eingegliedert werden sollen. Sie geht davon aus, dass durch einen jeweiligen Netzbetreiber bereits Adressen (Domain-Adressen oder IP-Adressen) von zum Managen derartiger Netze verwendeten Command- and-Control-Servern (C2-Servern) mittels spezieller, dafür ausgebildeter Netzwerkeinrichtungen ermittelt und registriert wurden. Die Methoden und Verfahrensweisen zu Identifizierung der Netzwerkadressen von C2-Servern sind demnach selbst nicht Gegenstand der vorliegenden Erfindung.

Gemäß dem vorgeschlagenen Verfahren wird beim Start einer Internet-Session, welche durch eine teilnehmerseitige Endeinrichtung TE unter Verwendung einer zuvor durch Netzwerkeinrichtungen des Netzbetreibers als maliziös identifizierten und registrierten Netzwerkadresse einer computerbasierten Angriffseinrichtung (im Weiteren auch CA) - wie einem C2-Server - gestartet wird, die diese Session startende Endeinrichtung TE von dafür ausgebildeten Netzwerkeinrichtungen des Netzbetreibers zur automatisierten Auslösung weiterer technischer Maßnahmen unter einem sie in dem Kommunikationsnetz eindeutig identifizierenden Kennzeichen automatisiert als infizierte TAE registriert. Dies geschieht, indem zu der beim Start der Internet-Session verwendeten maliziösen Netzwerkadresse durch ein dafür ausgebildetes Adressierungssubsystem ASS des Netzbetreibers eine vom Netzbetreiber festgelegte IPv6-Austauschadresse an die die Session startende TE zurückgegeben wird. Das heißt, bei der an die TE zurückgegebenen IPv6-Adresse handelt es sich nicht um eine die CA, also respektive den das Botnetz managenden und steuernden C2 adressierende Adresse. Es handelt sich vielmehr gewissermaßen um eine fiktive Adresse aus dem Adressbereich des Netzbetreibers, welche dafür bestimmten Netzwerkeinrichtungen des Netzbetreibers bekannt ist und deren Detektion, insbesondere in von einer infizierten TE ausgesendeten Datenpaketen, durch diese Netzwerkeinrichtungen, je nach Implementierung des Verfahrens zu unterschiedlichen, nachfolgend noch zu erläuternden Zwecken genutzt werden kann.

Die Infektion der TE wird also nicht aufgrund von Trendänderungen im Nutzungsverhalten einer infizierten teilnehmerseitigen Endeinrichtung TE, wie etwa an der Art und/oder dem Umfangs des von ihr geführten Datenverkehrs erkannt, sondern adressbasiert, nämlich an der Nutzung einer seitens des Netzbetreibers, respektive in seinen Netzwerkeinrichtungen registrierten, bekannterweise maliziösen Netzwerkadresse für den Start einer Internet-Session zum Datenaustausch über das Kommunikationsnetz. Um die diese maliziöse Netzwerkadresse nutzende TE trotz der Mehrfachvergabe von IPv4-Adressen zur Veranlassung weiterer Schritte eindeutig identifizieren zu können, wird, wie bereits ausgeführt, durch dafür ausgebildete, zu einem Adressierungssubsystem gehörende Netzwerkeinrichtungen des Netzwerkbetreibers an die, beim Start einer Internet-Session die maliziöse Netzwerkadresse verwendende TE eine (nicht die mit der maliziösen Adresse angesprochene CA adressierende) IPv6-Adresse als Austauschadresse zurückgegeben.

Hierdurch wird die betreffende TE veranlasst, weitere im Zusammenhang mit dem Aufbau (eigentlich mit dem Versuch des Aufbaus) einer Session mit der CA (die Session mit der CA kommt durch das Ersetzen der maliziösen Adresse mit der IPv6-Austauschadresse nicht zustande) ausgesendete Datenpakete unter Angabe ihrer eigenen, sie insoweit in dem Kommunikationsnetz eindeutig identifizierenden IPv6-Adresse auszusenden. Ausgehend von dieser IPv6-Adresse und dem zusammen mit ihr beim Start einer Session unter Verwendung einer maliziösen Netzwerkadresse abgespeicherten (in Netzwerkeinrichtungen des Netzbetreibers registrierten) Zeitstempel ist dann jederzeit nachvollziehbar, welche TE zu welchem Zeitpunkt eine Session zum Aufbau einer Verbindung mit einem maliziös genutzten Server (C2-Server) verwendet hat.

Die infizierte TE wird demnach, nämlich dadurch, dass sie selbst zur Aussendung ihrer eigenen IPv6-Adresse veranlasst wird, in einem automatisierten Ablauf eindeutig identifiziert. Dem folgend können dann dediziert auf die jeweilige Endeinrichtung abgestimmte Maßnahmen ergriffen und diese vorzugsweise ebenfalls automatisiert eingeleitet werden. Zwar ist davon auszugehen, dass eine adressbasierte Identifizierung einer infizierten TE grundsätzlich auch auf der IPv4-Ebene unter Rückgriff auf Daten aus dem Carrier grade NAT-Prozess möglich ist. Jedoch müssten entsprechende Daten nach derzeitigem Stand manuell zusammengetragen und in Beziehung zu zeitlichen Gegebenheiten bei der Adressvergabe und der jeweiligen Adressgültigkeit gebracht werden.

Sofern es sich bei der beim Start der Session verwendeten maliziösen Netzwerkadresse um einen Domain-Namen der CA handelt und es sich demnach bei dem durch diese gemangten und gesteuerten Botnetz um ein domain-basiertes Botnetz handelt, wird zu diesem Domain-Namen durch einen von dem Adressierungssubsystem umfassten DNS-Server die IPv6-Austauschadresse an die die Session startende TE zurückgegeben. Es sei aber betont, dass sich der Grundgedanke der vorgeschlagenen Lösung, nämlich das Ersetzen der maliziösen Adresse durch eine IPv6-Austauschadresse, respektive das Auflösen der maliziösen Adresse in eine die CA nicht mehr adressierende und somit gewissermaßen fiktive IPv6-Adresse, mit entsprechenden Abwandlungen auch auf IP-basierte Botnetze, also Botnetze bei denen der C2-Server (als CA) durch infizierte TE mittels einer maliziösen IPv4-Adresse angesprochen wird, umsetzen lässt.

Die Bezeichnung teilnehmerseitige "Endeinrichtung" wird in den Patentansprüchen und in dieser Beschreibung mit Blick darauf verwendet, dass die vorgestellte Lösung nicht nur entsprechend ihrem bevorzugten Einsatzgebiet im Mobilfunknetz, sondern auch für das Festnetz, im Zusammenhang mit einem beispielsweise aus einem WLAN heraus über ein IAD (Integrated Access Device) erfolgenden Nutzung des Internet und des dabei erfolgenden Starts einer Session unter Verwendung einer maliziösen Netzwerkadresse, erfolgen kann. Hierbei gelingt dann durch den Einsatz des Verfahrens allerdings nur die eindeutige Identifikation des entsprechenden IAD, über welches ein infiziertes Endgerät, wie beispielsweise ein PC oder ein Smartphone mit WLAN-Zugang, Verbindung mit dem Internet aufgebaut hat.

Hingegen ist es nicht möglich, unmittelbar das infizierte, mit dem IAD genutzte Endgerät selbst zu identifizieren, da insoweit eine weitergehende Adressauflösung in Bezug auf gegebenenfalls eine Vielzahl an dem IAD betriebener Endgeräte nicht möglich ist. Insoweit sind, im Kontext der hier erfolgenden Beschreibung der vorgeschlagenen Lösung und auch im Hinblick auf das dem Patentanspruch 1 zugrundliegende Verständnis, im Zusammenhang mit einer solchen Konstellation das IAD und das mit diesem betriebene infizierte Endgerät gewissermaßen als infizierte TE zusammenzulesen. Allerdings können sich eventuelle, durch den Netzbetreiber aufgrund der festgestellten Infektion eingeleitete Maßnahmen im Wesentlichen - Ausführungen zu etwas darüber hinaus gehenden Möglichkeiten sollen später erfolgen - nur auf das IAD, wie beispielsweise einen Router mit DSL-Modem, sowie auf dessen Betreiber beziehen.

Im Hinblick auf die zuvor besprochene Konstellation mit mehreren an einem IAD betriebenen Endgeräten wäre aber grundsätzlich auch eine Infektion des IAD selbst denkbar, mit welcher dann seitens des Netzwerkbetreibers und des von diesem informierten Betreibers des in diesem Falle die infizierte TE darstellenden IAD entsprechend umgegangen werden kann.

Anders verhält es sich hingegen in Bezug auf das bevorzugte Einsatzgebiet der hier beschriebenen Lösung, nämlich in Bezug auf den Umgang mit durch Schadsoftware infizierten mobilfunkfähigen Endgeräten. Hierbei ist, sofern diese Endgeräte nicht unter Nutzung eines WLANs im Internet betrieben werden, aufgrund der durch die Rückgabe einer IPv6-Austauschadresse zu der maliziösen Adresse der CA bewirkten Aussendung ihrer eigenen IPv6-Adresse tatsächlich eine eindeutige Identifikation der jeweiligen TE bis auf die Geräteebene hinunter möglich. In diesem Fall handelt es sich bei der in den Patentansprüchen bezeichneten TE, entsprechend dem Kontext des beanspruchten und hier erläuterten Verfahrens um das mobilfunkfähige Endgerät selbst.

Entsprechend unterschiedlich, nämlich abhängig von der Art der als infiziert erkannten und registrierten teilnehmerseitigen Endeinrichtung TE, können die seitens des Netzbetreibers in Reaktion auf die Infektion erfolgenden Maßnahmen ausfallen. Eine Möglichkeit des Umgangs mit einer bei einer TE festgestellten Infektion, welche sowohl bezogen auf ein IAD, an welchem ein infiziertes Endgerät betrieben wird, als auch in Bezug auf ein, eine TE darstellendes mobilfunkfähiges Endgerät angewendet werden kann, besteht darin, lediglich jeglichen Datenverkehr zwischen der betreffenden TE und der mit der als maliziös registrierten Netzwerkadresse adressierten CA zu blocken. Hierdurch wird jedenfalls zuverlässig verhindert, dass an ein infiziertes Endgerät, sei es nun ein Endgerät, welches in einem WLAN, also beispielsweise mit einem IAD, betrieben wird, oder ein Endgerät, welches unmittelbar über das Mobilfunknetz auf das Internet zugreift, durch den mittels der maliziösen Netzwerkadresse angesprochenen C2-Server Kommandos übertragen werden, welche das Endgerät missbräuchlich fremdsteuern. Ferner wird verhindert, dass gegebenenfalls durch das betreffende Endgerät weitere schädliche Dateien und Softwarekomponenten von dem C2-Server heruntergeladen werden. Demzufolge wird der mögliche, durch die Infektion entstehende Schaden unmittelbar begrenzt.

Ebenfalls unabhängig von der Art der als infiziert erkannten TE ist eine Implementierung des erfindungsgemäßen Verfahrens, entsprechend welcher die betreffende TE beim Start der Session unter Verwendung der als maliziös registrierten Netzwerkadresse an mindestens eine als eine Senke (Sinkhole) fungierende Netzwerkeinrichtung des Netzwerkbetreibers umgeleitet wird. Durch diese mindestens eine als Senke fungierende Netzwerkeinrichtung des Netzbetreibers können zum Beispiel forensische Untersuchungen an den zu ihr umgeleiteten Datenpaketen erfolgen. Hierzu kann es beispielsweise gehören, festzustellen welches Endgerät tatsächlich infiziert ist, nämlich zum Beispiel dann, wenn es sich dabei nicht um ein über eine IMEI identifizierbares mobiles Endgerät handelt.

So könnte zum Beispiel als vermeintlich infizierte TE zunächst ein IAD, wie ein Router mit DSL-Modem ausgemacht werden, wobei das IAD selbst tatsächlich nicht infiziert ist, aber ein an diesem, zur Nutzung des Internet über ein WLAN betriebenes Endgerät. Aufgrund entsprechender forensischer Untersuchungen kann dann darauf geschlossen werden, dass es sich bei dem infizierten Endgerät um ein mit dem IAD genutztes Smartphone handelt. Schließlich könnte der Betreiber/Inhaber des IAD auf die Infektion aufmerksam gemacht werden und dieses mit der Information angereichert werden, dass es sich bei dem eigentlich infizierten Endgerät mutmaßlich um ein im WLAN des IAD genutztes Smartphone handelt.

Darüber hinaus kann der die Session unter Verwendung der maliziösen Netzwerkadresse startenden TE, das heißt deren Nutzer (Inhaber und/oder Betreiber) an dieser TE, eine Internetseite des Netzbetreibers präsentiert werden. Über eine solche Internetadresse des Netzbetreibers kann dann der Inhaber und/oder Betreiber der betreffenden TE zumindest über die eingetretene Infektion informiert werden. Darüber hinaus können ihm über diese Webseite des Netzbetreibers auch noch weitere Informationen dazu vermittelt werden, wir er die auf seinem im Mobilfunknetz genutzten Endgerät oder bei einem mit einem IAD genutzten Endgerät installierte Schadsoftware wieder entfernen kann. Gegebenenfalls kann ihm dabei außerdem ein Link zur Unterstützung bei der Beseitigung der Infektion angeboten werden.

Sofern es sich bei der zum Start einer Internet-Session unter Nutzung einer maliziösen Netzwerkadresse verwendeten TE um ein mobilfunkfähiges, hierbei das Mobilfunknetz nutzendes Endgerät handelt, ist es möglich, auf dessen IMEI (International Mobile Equipment Identity) zu schließen. Dies ist möglich mittels der im Zusammenhang mit der Anmeldung in dem Mobilfunknetz in Netzwerkeinrichtungen des Mobilfunknetzbetreibers vermerkten Angaben, nämlich insbesondere mittels der von einem Teilnehmeridentitätsmodul SIM (Subscriber Identity Module) des verwendeten Endgeräts gehaltenen, die Mobilfunknummer MSISDN (Mobile Station International Subscriber Directory Number) einschließenden Teilnehmeridentifikationsnummer IMSI (International Mobile Subscriber Identity). In diesem Falle wird vorzugsweise zusammen mit der IPv6-Adresse und dem den Zeitpunkt des Starts der Session bezeichnenden Zeitstempel außerdem die das beim Start der Session verwendete Endgerät eindeutig bezeichnende IMEI registriert.

Entsprechend einer möglichen Ausgestaltung des Verfahrens kann dann im vorgenannten Fall die entsprechende IMEI zum Setzen einer gewissermaßen als "IMEI-Sperre" zu bezeichnenden Sperre in den Netzwerkeinrichtungen des Mobilfunknetzbetreibers verwendet werden. Hierdurch ist es möglich, auch unabhängig von einem eventuell nachfolgenden Austausch des SIM, wie zum Beispiel der SIM-Karte, in dem betreffenden Endgerät, dieses Endgerät - zumindest solange es infiziert ist - für den Datenverkehr zu sperren, indem für dieses das verfügbare Datenvolumen in den Netzwerkeinrichtungen des Mobilfunkbetreibers auf null gesetzt wird. Außerdem kann aufgrund der für ein mobiles Endgerät (TE) bestehenden Verknüpfung zwischen dessen IMEI und der MSISDN an den Nutzer des Endgeräts eine SMS mit einem Hinweis auf die eingetretene Infektion und gegebenenfalls mit einem Link zu einem Angebot zur Abhilfe übermittelt werden. Da (jedenfalls, solange der Nutzer damit nicht gleichzeitig in das Netz eines anderen Netzbetreibers wechselt) die Verknüpfung zwischen IMEI und MSISDN erhalten bleibt, kann das Versenden einer SMS auch dann erfolgen, wenn der Nutzer in dem mobilen Endgerät (TE) zwischenzeitlich das SIM (beispielsweise eine SIM-Karte) gewechselt hat.

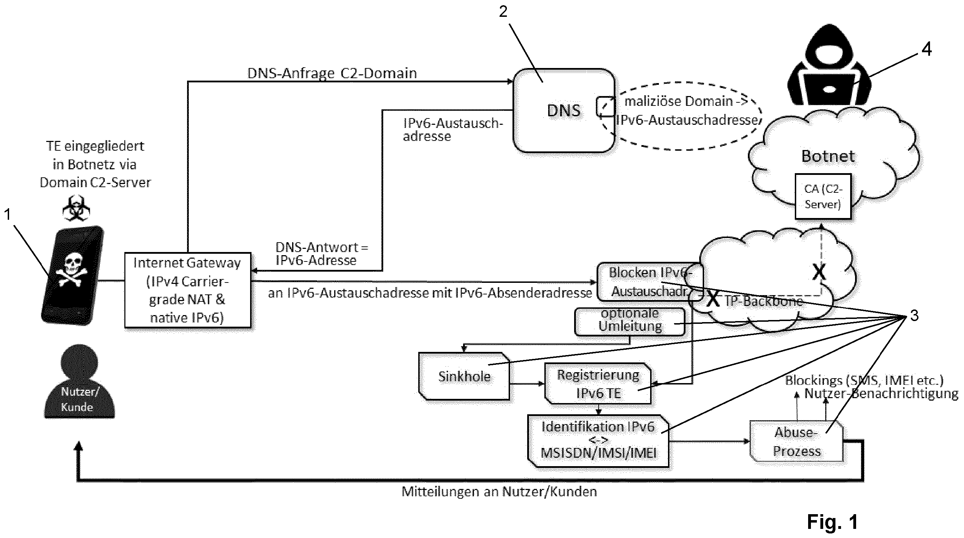

Nachfolgend wird unter Bezug auf die Fig. 1 nochmals auf einige Aspekte der Erfindung eingegangen. In der Fig. 1 ist ein Schema dargestellt, aus welchem die Abläufe des Verfahrens beim Start einer Session durch eine teilnehmerseitige Endeinrichtung TE 1 unter Verwendung einer maliziösen, einen C2-Server (computerbasierte Angriffseinrichtung 4) adressierenden Netzwerkadresse ersichtlich sind.

In dem gezeigten Beispiel handelt es sich bei der TE 1 um ein mobilfunkfähiges Endgerät, respektive um ein Mobilfunkgerät, beispielsweise um ein Smartphone. Diese TE 1 (das Smartphone) ist mit einer Malware infiziert worden, welche dazu dient, die TE in ein Botnetz (Botnet) einzugliedern, um sie fremdzusteuern. Durch die entsprechende Schadsoftware wird, ausgehend von der betreffenden TE 1, eine Internet-Session unter Verwendung eines Domain-Namens des das Botnetz managenden C2-Servers (computerbasierte Angriffseinrichtung 4) gestartet. Die betreffende TE 1, also das Smartphone, hat über ein sowohl für den Umgang mit IPv4-Adressen (einschließlich Nutzung des Carrier grade NAT-Mechanismus für die Mehrfachvergabe von IPv4-Adressen) als auch mit IPv6-Adressen ausgebildetes Internetgateway des Netzbetreibers Zugang zum Internet.

Durch eine zu einem Adressierungssubsystem gehörende Netzwerkeinrichtung 2 des Netzbetreibers (des Betreibers des Mobilfunknetzes) wird aufgrund einer früher erfolgten Identifikation des C2-Servers als computerbasierte Angriffseinrichtung CA 4 und der Registrierung des vorgenannten, zu dieser CA 4 gehörenden Domain-Namens erkannt, dass es sich bei der im Zusammenhang mit dem Start der Session verwendeten Netzwerkadresse (dem Domain-Namen) um eine maliziöse Netzwerkadresse handelt. Aufgrund dessen wird durch die besagte Netzwerkeinrichtung 2 des Netzbetreibers, im vorliegenden Fall ein DNS-Server, an die die Session startende TE 1, respektive an das Smartphone, eine (fiktive) IPv6-Adresse als Austauschadresse zurückgegeben. Das heißt, der DNS-Server löst gewissermaßen den Domain-Namen des mit dem Start der Session angesprochenen C2-Servers (der computerbasierten Angriffseinrichtung CA 4) in eine den C2-Server nicht mehr adressierende IPv6-Adresse auf. Hierdurch wird die TE 1, respektive das Smartphone dann veranlasst weitere Session-Daten unter Angabe seiner eigenen IPv6-Adresse als Absenderadresse auszusenden.

Jedoch wird dann aufgrund der Ersetzung der maliziösen Domain-Adresse durch die (fiktive) IPv6-Adresse im Weiteren die gestartete Session nicht dem C2-Server (der computerbasierten Angriffseinrichtung CA 4) zugeleitet, sondern stattdessen der gesamte Datenverkehr zwischen der TE 1 und dem betreffenden C2-Server durch dafür vorgesehene Netzwerkeinrichtungen eines Missbrauchserkennungs- und Behandlungssubsystems MBS 3 des Netzbetreibers blockiert. Optional kann die Anfrage nach Aufbau der Session auch einer Senke (Sinkhole) zur weiteren forensischen Untersuchung zugeleitet werden. In dafür ausgebildeten Netzwerkeinrichtungen des Missbrauchserkennungs- und Behandlungssubsystems MBS 3 des Netzbetreibers wird zudem die IPv6-Adresse des die Session startenden TE 1 zusammen mit einem Zeitstempel abgelegt.

Diesen Eintrag ergänzend können zudem noch weitere Angaben zur TE 1 ermittelt und registriert werden, wie insbesondere die IMEI des Smartphones (TE 1), mittels welcher die TE 1 in dem Mobilfunknetz dann tatsächlich bis auf die Geräteebene hinunter als infiziert identifizierbar ist. Dediziert zugeschnitten auf die als identifiziert erkannte TE 1, hier auf das mobilfunkfähige Endgerät, wird dann ein Abuse-Prozess (Prozess zur Behandlung von Missbrauch) eingeleitet, welcher vorzugsweise weitere technische Maßnahmen umfasst. Zu letzterem gehört auch die Information des Kunden, respektive des Nutzers der TE 1, über die eingetretene Infektion und dessen Unterstützung bei der Bereinigung der TE 1 von der Schadsoftware, um das in der Infektion zu sehende Problem nachhaltig zu lösen.

## Patentansprüche

1. Verfahren für das Handling von Malware-Infektionen, durch welche teilnehmerseitige Endeinrichtungen TE (1) eines Kommunikationsnetzes oder an ihnen betriebene Endgeräte mit einer Schadsoftware infiziert wurden, die ihrer Eingliederung in ein Botnetz, zum Zweck ihrer Fremdkontrolle und/oder Fremdsteuerung mittels einer entfernten, computerbasierten Angriffseinrichtung CA (4) dient, **dadurch gekennzeichnet, dass** bei einem Start einer Internet-Session für einen Datenaustausch über das Kommunikationsnetz, welcher durch eine Endeinrichtung TE (1) unter Verwendung einer zuvor durch Netzwerkeinrichtungen eines Missbrauchserkennungs- und Behandlungssubsystems MBS (3) des Netzbetreibers als maliziös identifizierten und registrierten Netzwerkadresse einer Angriffseinrichtung CA (4) erfolgt, die diese Session startende Endeirichtung TE (1) zur automatisierten Auslösung weiterer sich dediziert auf diese Endeirichtung TE (1) beziehender technischer Maßnahmen unter einem sie in dem Kommunikationsnetz eindeutig identifizierenden Kennzeichen als infizierte Endeinrichtung TE (1) registriert wird, indem durch Netzwerkeinrichtungen (2) eines Adressierungssubsystem ASS des Netzbetreibers zu der beim Start der Session verwendeten maliziösen Netzwerkadresse der Angriffseinrichtung CA (4) eine festgelegte IPv6-Austauschadresse des Netzbetreibers an die Endeinrichtung TE (1) zurückgegeben und diese hierdurch veranlasst wird, mit der Aussendung weiterer Session-Daten als Absenderadresse ihre eigene IPv6-Adresse anzugeben, welche durch dafür ausgebildete Netzwerkeinrichtungen des Missbrauchserkennungs- und Behandlungssubsystems MBS (3) des Netzbetreibers zusammen mit einem den Zeitpunkt des Starts der Session bezeichnenden Zeitstempel registriert wird.

2. Verfahren nach Anspruch 1, wobei es sich bei der zum Aufbau der Internet-Session verwendeten, in den Netzwerkeinrichtungen des Missbrauchserkennungs- und Behandlungssubsystems MBS (3) des Netzbetreibers als maliziös registrierten Netzwerkadresse der Angriffseinrichtung CA (4) um einen Domain-Namen handelt, **dadurch gekennzeichnet, dass** die IPv6-Adresse durch einen von den Netzwerkeinrichtungen (2) des Adressierungssubsystems umfassten DNS-Server als Austauschadresse an die die Internet-Session startende Endeinrichtung TE (1) zurückgegeben wird.

3. Verfahren nach Anspruch 1 oder 2, wobei es sich bei der die Session unter Verwendung der als maliziös registrierten Netzwerkadresse aufbauenden Endeinrichtung TE (1) um ein dafür ein Mobilfunknetz nutzendes Endgerät handelt, **dadurch gekennzeichnet, dass** zu diesem Endgerät neben der von diesem beim Versuch des Aufbaus der Session verwendeten IPv6-Adresse und dem Zeitstempel die, unter Rückgriff auf die für das Endgerät durch Netzwerkeinrichtungen des Netzbetreibers ermittelte Internationale Identitätsnummer für mobile Geräte IMEI abgespeichert wird.

4. Verfahren nach Anspruch 3, **dadurch gekennzeichnet, dass** durch Netzwerkeinrichtungen des Missbrauchserkennungs- und Behandlungssubsystems MBS (3) des Netzbetreibers an einen Mobilfunkteilnehmer, welcher durch eine auf einem Identifikationsmodul SIM des die Internet-Session unter Verwendung der als maliziös registrierten Netzwerkadresse aufbauenden Endgeräts TE (1) gespeicherte Teilnehmeridentifikationsnummer IMSI identifiziert wird, eine den Teilnehmer zumindest über die bestehende Infektion unterrichtende Nachricht versendet wird.

5. Verfahren nach Anspruch 4, **dadurch gekennzeichnet, dass** durch Netzwerkeinrichtungen des Missbrauchserkennungs- und Behandlungssubsystems MBS (3) des Netzbetreibers eine SMS-Nachricht an eine mit der IMSI verknüpfte Mobilfunknummer des Teilnehmers ausgesendet wird.

6. Verfahren nach einem der Ansprüche 3 bis 5, **dadurch gekennzeichnet, dass** zu der IMEI des die Session unter Verwendung der als maliziös registrierten Netzwerkadresse aufbauenden Endgeräts in mindestens einer für die Datenübertragung durch Netzwerkeinrichtungen des Netzbetreibers zwingend anzusprechenden Datenbank ein Sperreintrag erzeugt wird, aufgrund welches durch mindestens eine hierfür ausgebildete Netzwerkeinrichtung des Missbrauchserkennungs- und Behandlungssubsystems MBS (3) des Netzbetreibers das verfügbare Datenvolumen für das mit dem IMEI-Sperreintrag belegte Endgerät auf null gesetzt wird, so dass für die Dauer des Bestehens des Sperreintrags zu dieser IMEI jeglicher an ein verfügbares Datenvolumen gebundener Datenverkehr von und zu dem mit der IMEI assoziierten Endgerät unterbunden wird.

7. Verfahren nach einem der Ansprüche 1 bis 6, **dadurch gekennzeichnet, dass** durch dafür ausgebildete Netzwerkeinrichtungen des Missbrauchserkennungs- und Behandlungssubsystems MBS (3) des Netzbetreibers die von der Endeinrichtung TE (1) unter Verwendung der als maliziös registrierten Netzwerkadresse gestartete Session unterbunden und jeglicher Datenverkehr zwischen dieser Endeinrichtung TE (1) und der mit der als maliziös registrierten Netzwerkadresse adressierten Angriffseinrichtung CA (4) geblockt wird.

8. Verfahren nach einem der Ansprüche 1 bis 6, **dadurch gekennzeichnet, dass** die Endeinrichtung TE (1) beim Start der Session unter Verwendung der als maliziös registrierten Netzwerkadresse und bei der Aussendung weiterer Session-Daten auf mindestens eine als eine Senke (Sinkhole) fungierende Netzwerkeinrichtung des Missbrauchserkennungs- und Behandlungssubsystems MBS (3) des Netzbetreibers umgeleitet wird.

9. Verfahren nach Anspruch 8, **dadurch gekennzeichnet, dass** durch die mindestens eine als Senke fungierende Netzwerkeinrichtung des Missbrauchserkennungs- und Behandlungssubsystems MBS (3) des Netzbetreibers forensische Untersuchungen an den zu dieser Senke umgeleiteten Datenpaketen der Endeinrichtung TE (1) erfolgen.

10. Verfahren nach Anspruch 8 oder 9, **dadurch gekennzeichnet, dass** durch die mindestens eine als Senke fungierende Netzwerkeinrichtung des Missbrauchserkennungs- und Behandlungssubsystems MBS (3) der die Session aufbauenden Endeinrichtung TE (1) eine Internetseite präsent wird, auf welcher der Inhaber und/oder Betreiber dieser Endeinrichtung TE (1) zumindest über die eingetretene Infektion informiert wird.

11. System, nämlich Kommunikationsnetz mit teilnehmerseitigen Endeinrichtungen TE (1) und mit einer Mehrzahl von Netzwerkeinrichtungen eines Netzbetreibers, wobei die Netzwerkeinrichtungen des Netzbetreibers umfassen
- Netzwerkeinrichtungen zur Übertragung von Daten zwischen den teilnehmerseitigen Endeinrichtungen TE (1) und computerbasierten Einrichtungen im Internet sowie zur Steuerung dieser Übertragungsvorgänge,
- Netzwerkeinrichtungen (2) eines Adressierungssubsystems ASS zur Verarbeitung zur Adressierung der computerbasierten Einrichtungen im Internet genutzter Netzwerkadressen,
- Netzwerkeinrichtungen, welche ein Missbrauchserkennungs- und Behandlungssubsystem MBS (3) ausbilden,
- Netzwerkeinrichtungen zur datenbankgestützten Verwaltung von Vertrags- und Nutzerdaten,
**dadurch gekennzeichnet, dass** die Netzwerkeinrichtungen (2) des Adressierungssubsystems ASS dazu ausgebildet und eingerichtet sind, an eine teilnehmerseitigen Endeinrichtungen TE (1), welche eine Internet-Session unter Verwendung einer zuvor durch Netzwerkeinrichtungen (3) des Missbrauchserkennungs- und Behandlungssubsystems MBS als maliziös identifizierten und registrierten Netzwerkadresse einer computerbasierten Angriffseinrichtung CA (4) startet, eine festgelegte IPv6-Austauschadresse des Netzbetreibers zurückzugeben, wobei die Netzwerkeinrichtungen (2) des Adressierungssubsystems ASS eine Datenbank mit als maliziös registrierten Netzwerkadressen umfassen oder über einen Zugriff auf eine solche, durch Netzwerkeinrichtungen des Missbrauchserkennungs- und Behandlungssubsystems MBS (3) gehaltene Datenbank verfügen und wobei Netzwerkeinrichtungen des Missbrauchserkennungs- und Behandlungssubsystems MBS (3) dazu ausgebildet sind, IPv6-Adressen maliziöse Netzwerkadressen beim Start einer Session verwendender Endeinrichtungen TE (1) gemeinsam mit einem den Zeitpunkt des Starts einer solchen Session bezeichnenden Zeitstempel zu registrieren.

12. System nach Anspruch 11, **dadurch gekennzeichnet, dass** die Netzwerkeinrichtungen (2) des Adressierungssubsystems ASS mindestens einen DNS-Server umfassen, der dazu ausgebildet ist, die IPv6-Austauschadresse an eine Endeinrichtungen TE (1) zurückzugeben, welche eine Internet-Session unter Verwendung einer maliziösen Domain-Adresse startet.
